Europäisches Patentamt

European Patent Office

Office européen des brevets

(19)

(11) Veröffentlichungsnummer : **0 172 261
B1**

(12) **EUROPÄISCHE PATENTSCHRIFT**

(45) Veröffentlichungstag der Patentschrift :
30.08.89

(51) Int. Cl.⁴ : **A 01 B 15/02**

(21) Anmeldenummer : 84105979.3

(22) Anmeldetag : 25.05.84

(54) Befestigungseinrichtung für Vorwerkzeuge.

(43) Veröffentlichungstag der Anmeldung :
26.02.86 Patentblatt 86/09

(45) Bekanntmachung des Hinweises auf die Patenterteilung : 30.08.89 Patentblatt 89/35

(84) Benannte Vertragsstaaten :
AT CH DE FR GB IT LI NL

(56) Entgegenhaltungen :
US–A– 2 744 460
US–A– 2 757 595

(73) Patentinhaber : Rabewerk Heinrich Clausing

D-4515 Bad Essen 1 (DE)

(72) Erfinder : Schröer, Friedrich, Dipl.-Ing.
Im Weidengrund 5
D-4515 Bad Essen 1 (DE)
Erfinder : Buhl, Manfred, Dipl.-Ing.
Am Krähenhügel 10
D-4500 Osnabrück (DE)

(74) Vertreter : Missling, Arne, Dipl.-Ing. et al
Patentanwälte Dipl.-Ing. R. Schlee Dipl.-Ing. A. Missling Bismarckstrasse 43
D-6300 Giessen (DE)

## Beschreibung

Die Erfindung betrifft eine Einrichtung für die verstellbare Befestigung von Vorwerkzeugen — z. B. Düngereinleger, Vorschäler, Rundseche — an Pflügen, gemäß dem Oberbegriff von Anspruch 1.

Als Stiele für die Vorwerkzeuge solcher Geräte werden in der Regel gekröpfte Rundeisenstiele verwendet, die mit einer Klemmeinrichtung am Pflugrahmen und am Vorwerkzeug befestigt werden. Der Grund hierfür besteht darin, daß der Abstand des Vorwerkzeuges zum Pflugrahmen wie auch die Neigung des Vorwerkzeuges zur Pflugrichtung einstellbar sein muß. Diese Einstellbarkeit ist insbesondere dann erforderlich, wenn die Grindel der Pflugkörper verstellbar zum Rahmen ausgebildet sind, denn dann müssen nach jeder Verstellung der Grindel auch die Vorwerkzeuge der Arbeitsbreite der Pflugkörper angepaßt werden.

Es ist problematisch, die runden Stiele in ihren Stellungen am Pflugrahmen und am Vorwerkzeug dauerhaft zu sichern. In der Regel erfolgt die Befestigung so, daß die runden Stiele in eine keilförmige Ausnehmung eingepreßt werden, wobei die hierdurch erzeugte Reibungskraft die Stiele festlegen soll. Die Erfahrungen haben jedoch gezeigt, daß die Anpreßkraft nicht ausreichend ist, um einen dauerhaften festen Sitz der Stiele zu erreichen. Auch das Anbringen von Kerben in den Stielen bzw. von Vorsprüngen oder Verzahnungen (US-A-27 44 460) auf Widerlager-Laschen, die in das Material der Stiele bzw. der Laschen eindringen sollten, haben nicht den gewünschten Erfolg gebracht, denn die für die Laschen und auch die Stiele verwendeten Materialien sind hart vergütet, um den hohen Belastungen standhalten zu können. Darüberhinaus haben die wechselnden Belastungen die Vorsprünge schnell abgearbeitet, so daß der Erfolg nur von geringer Dauer war. Insbesondere war ein fester Sitz nach einem einmaligen oder mehrmaligen Verstellen von Werkzeugen und Stiel nicht mehr gewährleistet.

Um dieses Problem zu lösen, sind auch bereits an dem Stiel Arme angeschweißt worden, in denen Einstellschrauben angebracht sind. Desweiteren hat man bereits eine runde Scheibe konzentrisch am Stiel angeschweißt, in der Bohrungen über den Umfang angeordnet sind, durch die dann Zapfen greifen. Diese bekannten Maßnahmen zeigen entweder den Nachteil, daß die Einstellbarkeit vom Stiel zum Pflug bzw. zum Vorwerkzug begrenzt ist oder aber der Einstellwinkel nur in großen Schritten veränderbar ist.

Der Erfindung liegt die Aufgabe zugrunde, eine Einrichtung der eingangs genannten Art für die Befestigung von Vorwerkzeugen wie z. B. Düngereinlegern, Vorschäler und Rundsechen an Pflügen vorzuschlagen, die einfach im Aufbau und kostengünstig in der Herstellung ist und die darüberhinaus eine erforderliche feinteilige Verstellung bei einem dauerhaft festen Sitz zuläßt.

Diese Aufgabe wird mit den Merkmalen des kennzeichnenden Teils des Anspruches 1 gelöst. Gemäß der Erfindung ist somit der Stiel in einer Klemmvorrichtung gehalten, die vorteilhaft trapezförmig ausgebildet ist und in der der Stiel mittels einer Druckplatte eingepreßt ist. Darüberhinaus ist am Stiel im Bereich dieser Klemmeinrichtung ein Zahnkranz angeschweißt, der sich zumindest über ein Drittel des Umfanges, vorteilhaft jedoch über den gesamten Umfang erstreckt und somit den Verstellbereich abdeckt. Dieser Zahnkranz kann entweder fest mit dem Stiel verschweißt sein, in jedem Fall muß er jedoch drehfest mit diesem verbunden sein, wobei auch eine Längsverschiebung in der Achse des Stieles gegeben sein kann, um gegebenenfalls einen Höhenausgleich durchführen zu können. Zur drehfesten Festlegung des Stiels am Pflugrahmen bzw. des Werkzeuges am Stiel wird der Zahnkranz beim Einpressen in die Aufnahme in ein Widerlager eingedrückt, so daß, da der Zahnkranz drehfest in dem Stiel verbunden ist, auch eine drehfeste Verbindung von Stiel und Pflugrahmen bzw. von Stiel und Werkzeug gegeben ist.

Gemäß einer vorteilhaften Ausführungsform der Erfindung besteht das Widerlager aus einer Platte mit einer Aussparung, die den Abmessungen des Zahnkranzes angepaßt ist, wobei die Öffnung der Aussparung und der Abstand der der Aussparung angepaßten Zahnflanken in etwa gleich groß ist. Beim Eindrücken des Stiels in die Aufnahme wird auch die Platte verformt, so daß sich die Zähne fest in die Aussparung einlegen und durch deren Ränder festgelegt sind. Die Aussparung kann entweder direkt in der Druckplatte angeordnet sein oder aber auch in einer der Druckplatte gegenüberliegenden Platte, die im hinteren Bereich der Aufnahme liegt. Eine andere Lösung kann darin bestehen, daß die Aufnahme seslbst mit einer entsprechenden Aussparung und somit mit vorspringenden Flächen versehen ist, die in die Zähne des Zahnkranzes eingreifen. Eine derartige Festlegung empfiehlt sich in erster Linie für die Befestigung der Werkzeuge am Stiel. Hier kann die Brust des Werkzeuges gleichzeitig zu einer Aufnahme verformt sein, wobei am oberen Rand eine Ausnehmung ausgebildet ist, die das Widerlager für den Zahnkranz bildet.

Weitere Vorteile der Erfindung gehen aus den Unteransprüchen in Verbindung mit Beschreibung und Zeichnung hervor.

Drei Ausführungsbeispiele der Erfindung sind im folgenden anhand der Zeichnung näher beschrieben. In dieser zeigen :

Fig. 1 a) die Seitenansicht eines Pfluges,

b) die Draufsicht auf einen Pflug mit einem Pflugkörper und einem Vorwerkzeug mit einer erfindungsgemäß ausgebildeten Befestigungseinrichtung,

Fig. 2 eine Seitenansicht einer Einrichtung gemäß der Erfindung,

Fig. 3 eine Draufsicht auf das Ausführungsbeispiel nach Fig. 2,

Fig. 4 eine Draufsicht auf die Aufnahme für den Stiel,

Fig. 5 einen teilweisen Schnitt durch die Druckplatte und den Stiel mit dem Zahnkranz,

Fig. 6 eine Seitenansicht der Druckplatte gemämß Fig. 2 und 3,

Fig. 7 eine Seitenansicht eines weiteren Ausführungsbeispiels gemäß der Erfindung,

Fig. 8 eine Draufsicht auf das Ausführungsbeispiel nach Fig. 7,

Fig. 9 einen Schnitt nach Linie IX-IX in Fig. 7,

Fig. 10 eine Seitenansicht der Druckplatte gemäß dem Ausführungsbeispiel nach Fig. 7 und 8,

Fig. 11 ein weiteres Ausführungsbeispiel einer Befestigungseinrichtung für ein Vorwerkzeug und

Fig. 12 einen Schnitt nach Linie XII-XII in Fig. 11.

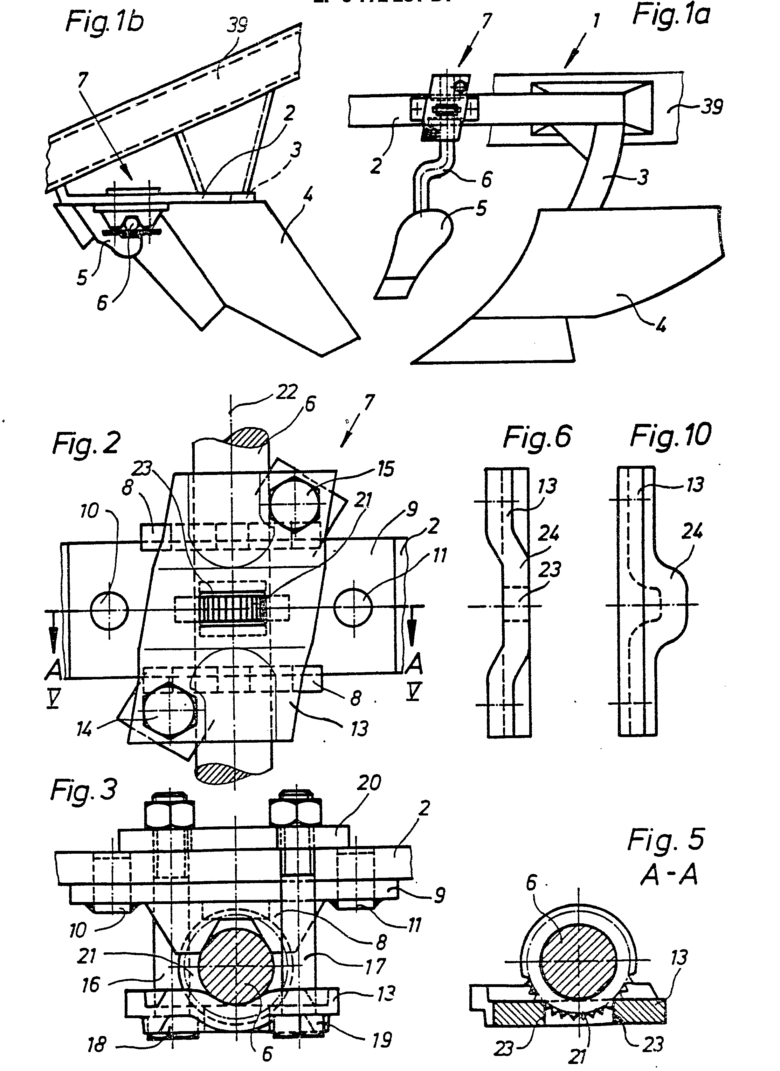

In Fig. 1 a) und 1 b) ist ein Pflug 1 dargestellt mit seinem Pflugrahmen 39, an dem ein Grindel 3 mit einem Pflugkörper 4 angebracht ist. Vor dem Pflugkörper 4 ist ein Vorwerkzeug 5 an einer Konsole 2 des Pflugrahmens 39 über einen Stiel 6 angebracht. Die Befestigung des Stieles 6 mit der Konsole 2 erfolgt über eine Klemmvorrichtung 7, die im folgenden noch näher beschrieben werden wird. Des weiteren ist der Stiel 6 gleichfalls mit dem Vorwerkzeug 5 über eine entsprechende Klemmvorrichtung verbunden. Der Stiel 6 besteht aus Rundeisen und ist abgekröpft, so daß durch Verdrehung des Stieles 6 in der Befestigungseinrichtung 7 der Abstand des Vorwerkzeuges 5 zum Pflugrahmen 2 einstellbar ist. Des weiteren ist durch Verschwenkung des Vorwerkzeuges 5 gegenüber dem Stiel 6 eine Verstellung der Arbeitsrichtung des Vorwerkzeuges möglich.

In den Fig. 2 bis 6 ist eine Ausführungsform für die Befestigung des Stieles 6 am Pflugrahmen 2 gezeigt. Die Befestigungseinrichtung 7 besteht aus einer Aufnahme 8, die in Fig. 4 in Draufsicht gezeichnet ist. Diese Aufnahme 8 ist an einer Platte 9 angeschweißt, die über zwei Zapfen 10, 11 mit dem Pflugrahmen 2 verbunden ist. Die Aufnahme 8 hat eine trapezförmige Öffnung 12, in die der Stiel 6 eingepreßt ist. Die Aufnahme 8 wird durch zwei mit Abstand angeordnete, mit der trapezförmigen Öffnung 12 versehene Platten gebildet. Zum Einpressen des Stieles 6 in die trapezförmige Ausnehmung 12 dient eine Druckplatte 13, die zwei Bohrungen 14, 15 aufweist, durch die Zugbolzen 16, 17 gesteckt sind. Auf die Bolzen sind Muttern 18, 19 aufgeschraubt. Die Bolzen greifen über die Platte 9 und die am Pflugrahmen angeordnete Konsole 2 und stützen sich an dieser über eine Platte 20 ab. Beim Spannen der Muttern 18, 19 drückt die Druckplatte 13 gegen den Stiel 6, so daß dieser in die trapezförmige Öffnung 12 der Aufnahme 8 gepreßt wird.

Am Stiel 6 ist ein Zahnkranz 21 drehfest befestigt, der längs der Stielachse 22 verschiebbar angeordnet sein kann. In der Druckplatte 13 ist eine Aussparung 23, die auf die Zähne des Zahnkranzes 21 derart abgestimmt ist, daß die Größe der Aussparung genauso bzw. etwas größer ist als der Abstand der Zähne, die parallele Zahnflanken zueinander aufweisen. Dies ist in Fig. 5 dargestellt. Beim Einpressen des Stieles 6 in die Aufnahme 8 greift somit der Zahnkranz, der drehfest mit dem Stiel 6 verbunden ist, in die Aussparung 23 der Druckplatte 13 ein. Die Druckplatte 13 hat, verglichen mit der Aufnahme 8, ein wesentlich geringeres Widerstandsmoment, so daß beim Einpressen des Stieles 6 in die Aufnahme 8 die Druckplatte verformt wird, so daß sich diese fest an die Zähne des Zahnkranzes anlegt, so daß der Stiel drehfest in der Befestigungseinrichtung 7 gehalten ist. Die Druckplatte 13 weist im Bereich der Aussparung 23 eine leichte Ausformung 24 auf, die dem Zahnkranz angepaßt ist.

Die Zapfen 10, 11 für die die Aufnahme 8 tragende Platte 9 haben einen unterschiedlichen Abstand zur Aufnahme 8, so daß beim Umdrehen der Befestigungsplatte 9 der Abstand des Stieles 6 in waagerechter Richtung relativ zum Pflugrahmen einstellbar ist.

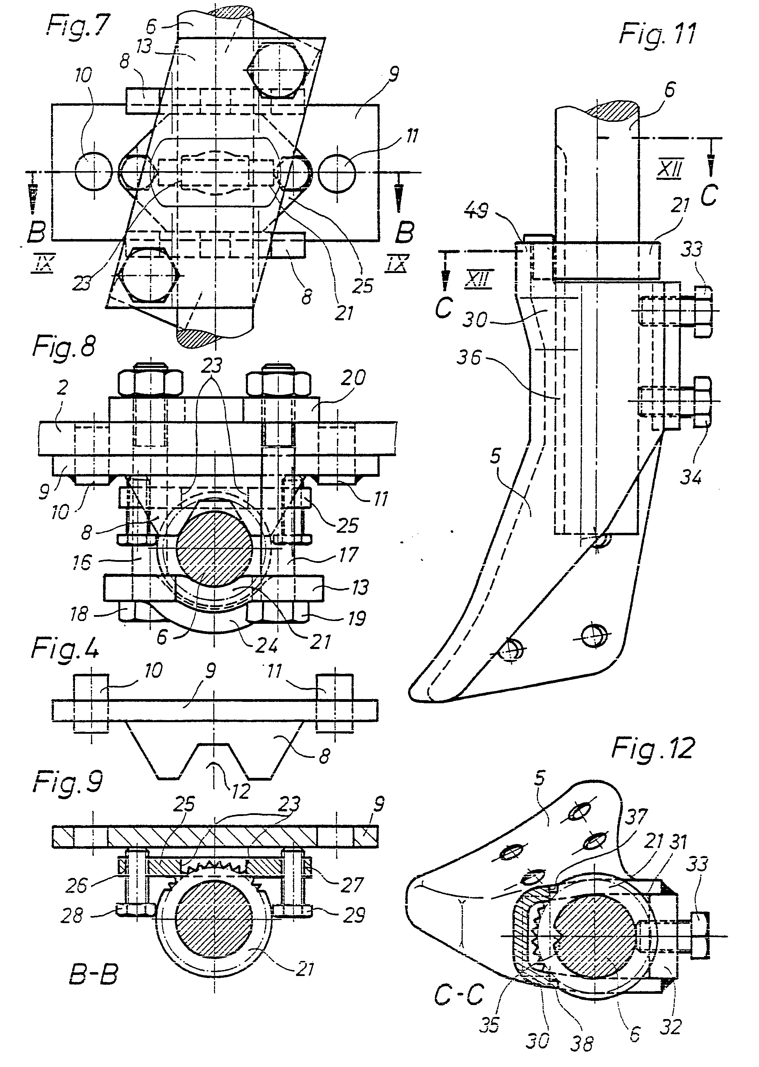

Ein weiteres Ausführungsbeispiel der Erfindung ist in den Fig. 7 bis 9 dargestellt, in denen gleiche Teile mit gleichen Bezugszeichen versehen sind. Der Unterschied dieser Ausführungsform zu der nach den Fig. 2 bis 6 besteht im wesentlichen darin, daß die Aussparung 23 nicht in der Druckplatte 13 angeordnet ist, sondern in einer zusätzlichen Platte 25, die auf der anderen Seite des Stieles 6, der Druckplatte 13 gegenüberliegend angeordnet ist. Diese Platte 25 ist in Fig. 9 im Schnitt dargestellt. Die Befestigung des Stieles 6 in der Befestigungseinrichtung erfolgt dadurch, daß die Muttern 18, 19 der Zugbolzen 16, 17 angezogen werden und der Stiel 6 in die Aufnahme 8 eingepreßt wird. Hierbei greift der Zahnkranz 21 gleichzeitig in die Aufnahme 23 der Platte 25 ein. Diese Platte 25 ist zusätzlich verstellbar ausgebildet, d. h. diese weist Gewindebohrungen 26, 27 auf, in denen Stellschrauben 28, 29 eingeschraubt sind. Durch entsprechende Drehbewegung der Stellschrauben 28, 29 kann die Platte 25 gegen den Zahnkranz 21 oder von diesem weg bewegt werden. Hierdurch ist zuätzlich ein festes Anpressen der Platte 25 gegen den Zahnkranz 21 gewährleistet. Durch unterschiedliche Einstellung der Stellschrauben 28, 29 ist zusätzlich eine leichte Verschwenkung des Stieles 6 möglich. Das gleiche wird auch durch Verstellung der Zugbolzen 16, 17 beim Beispiel Fig. 3 erreicht. Die Druckplatte 13, die in Seitenansicht in Fig. 10 dargestellt ist, weist eine Ausformung 24 aus, die zur Aufnahme des Zahnkranzes 21 bestimmt ist.

Bei dem Ausführungsbeispiel, das in den Fig. 11 und 12 dargestellt ist, dient die Befestigungseinrichtung zur Befestigung eines Vorwerkzeuges 5. Die Brust 30 des Vorwerkzeuges ist zu einer Aufnahme 8 verformt und weist eine trapezförmige Öffnung 31 auf, in die der Stiel 6 eingepreßt wird. Hierzu ist an der Brust eine Platte 32 angeschweißt, in die zwei Stellschrauben 33, 34 eingesetzt sind. Diese Stellschrauben greifen unmittelbar auf den Stiel und pressen diesen bei entsprechender Verdrehung gegen die Wandung der trapezförmigen Öffnung 31.

Am Stiel 6 ist ein Zahnkranz 21 angeordnet, der mit einem nach innen greifenden Zahn 35 versehen ist. Dieser Zahn greift in eine im Stiel 6 ausgebildete Nut 36. Hierdurch ist erreicht, daß der Zahnkranz 21 relativ zum Stiel in Längsrichtung verschiebbar, jedoch drehfest an diesem angebracht ist. Durch diese Verschiebbarkeit ist in einfacher Weise die Arbeitstiefe des Vorwerkzeuges 5 einstellbar. Das obere Ende 49 der Brust 30 ist über ein Stück, das etwas größer ist als die Höhe des Zahnkranzes 21, ausgespart und bildet mit seinen Flächen 37, 38 ein Widerlager für den Zahnkranz 21. Beim Einpressen des Stieles 6 in die konische Öffnung der Brust 30 wird gleichzeitig der Zahnkranz mit seinen Zähnen gegen die Flächen 37 und 38 der Brust gepreßt. so daß hierdurch gleichzeitig eine drehfeste Festlegung des Stieles 6 am Werkzeug erfolgt. Hierdurch wird die gleiche Festlegung des Stieles 6 erhalten wie bei den Ausführungsbeispielen nach den Fig. 1 bis 10, bei denen die Zahnflanken der Zähne des Zahnkranzes an den Seitenwänden der Ausnehmungen 23 zur Anlage kommen.

**Patentansprüche**

1. Einrichtung für die verstellbare Befestigung von Vorwerkzeugen — z. B. Düngereinleger, Vorschäler, Rundseche — an Pflügen, mit einem die Vorwerkzeuge (5) mit dem Pflug (1) verbindenden Stiel (6), der über eine Klemmvorrichtung (7) mit dem Pflug (1) verbunden ist und an dem die Vorwerkzeuge über je eine weitere Klemmvorrichtung befestigt sind, wobei mindestens eine von diesen Klemmvorrichtungen, die mit dem Pflugrahmen (2, 39) und/oder dem Werkzeug (5) verbindbar ist, eine Aufnahme (8) für die Festlegung des Stieles (6) in Achsrichtung hat, ferner mit einer Druckplatte (13, 32) und Spannmitteln (16 bis 19 ; 33, 34), die den Stiel (6) in der Aufnahme (8) halten, mit der ein Widerlager, (23 ; 37, 38) drehfest verbindbar ist, das vorspringende Flächen (37, 38) aufweist, dadurch gekennzeichnet, daß für die drehfeste Festlegung des Stieles (6) dieser mit einem oder mehreren Zahnkränzen (21) versehen ist, der bzw. die sich zumindest über einen Teil des Umfanges des Stieles (6) erstrecken, zwischen deren Zähnen das Widerlager (23 ; 37, 38) im festgelegten Zustand eingreift, daß letzteres entweder durch eine auf den Zahnkranz (21) abgestimmte Aussparung (23) in einer Platte (13, 25) oder durch die vorspringenden Flächen (37, 38) gebildet ist, die drehfest zur Aufnahme (8) angeordnet sind, und daß die Aussparung (23) bzw. die Flächen (37, 38) durch die Spannmittel (16 bis 19) in den Zahnkranz (21) gepreßt gehalten sind.

2. Einrichtung nach Anspruch 1, dadurch gekennzeichnet, daß die Aussparung (23) in der Druckplatte (13) angebracht ist.

3. Einrichtung nach Anspruch 1 oder 2, dadurch gekennzeichnet, daß die Aussparung (23) in einer der Druckplatte (13) gegenüberliegenden Platte (25) angeordnet ist.

4. Einrichtung nach einem der Ansprüche 1 bis 3, dadurch gekennzeichnet, daß das Widerlager durch die Aussparung (23) in der Druckplatte (13) gebildet ist.

5. Einrichtung nach einem der Ansprüche 1 bis 4, dadurch gekennzeichnet, daß der Zahnkranz (21) längs der Stielachse verschiebbar angeordnet ist.

6. Einrichtung nach einem der Ansprüche 1 bis 5, dadurch gekennzeichnet, daß die Druckplatte (13) im Bereich des Zahnkranzes (21) eine dessen Kontur angepaßte Ausformung (24) aufweist.

7. Einrichtung nach einem der Ansprüche 1 bis 6, dadurch gekennzeichnet, daß in der Druckplatte (32) Spannmittel (33, 34) angeordnet sind, die unmittelbar auf den Stiel (6) einwirken.

8. Einrichtung nach einem der Ansprüche 1 bis 7, dadurch gekennzeichnet, daß die Aufnahme (8) für die Befestigung des Stieles (6) am Pflugrahmen (2, 39) außermittig zu den Zapfen (10, 11) der Aufnahme (8) angeordnet ist.

9. Einrichtung nach einem der Ansprüche 1 bis 8, dadurch gekennzeichnet, daß die Aufnahme (8) trapezförmig ausgebildet ist.

**Claims**

1. Device for adjustably securing leading tools — e. g. fertiliser chargers, skim coulters, disk coulters — on ploughs comprising a shaft (6), which connects the leading tools (5) with the plough (1), is connected via a clamping device (7) with the plough (1) and on which the leading tools are secured by means of a further clamping device in each case, at least one of said clamping devices, which can be connected with the plough chassis (2, 39) and/or the tool (5), having a receiving part (8) for securing the shaft (6) in an axial direction, also comprising a pressure plate (13, 32) and tensioning means (16 to 19 ; 33, 34) which hold the shaft (6) in the receiving part (8), with which an abutment (23 ; 37, 38) is rotationally rigidly connected, which comprises projecting surfaces (37, 38), characterised in that for the rotationally rigid securing of the shaft (6) the latter is provided with one or more gear rims (21), which extend (s) over at least part of the circumference of the shaft (6) and between whose teeth the abutment (23 ; 37, 38) engages in the secured state in that the abutment (23) is formed either by a recess (23) in a plate (13, 25) adapted to the gear rim (21) or by the projecting surfaces (37, 38), which are arranged rotationally rigid relative to the receiving part (8) and in that the recess (23) or the surfaces (37, 38) are held pressed into the gear rim (21) by the tensioning means (16 to 19).

2. A device according to claim 1, characterised in that the recess (23) is formed in the pressure plate (13).

3. A device according to claim 1 or 2 characterised in that the recess (23) is disposed in a plate (25) lying opposite the pressure plate (13).

4. A device according to one of claims 1 to 3, characterised in that the abutment is formed by the recess (23) in the pressure plate (13).

5. A device according to one of claims 1 to 4, characterised in that the gear rim (21) is arranged so as to be displaceable along the shaft axis.

6. A device according to one of claims 1 to 5, characterised in that in the region of the gear rim (21), the pressure plate (13) comprises a bent portion (24) adapted to the contour of the gear rim (21).

7. A device according to one of claims 1 to 6, characterised in that tensioning means (33, 34), which act directly upon the shaft (6), are arranged in the pressure plate (32).

8. A device according to one of claims 1 to 7, characterised in that the receiving part (8) for securing the shaft (6) to the plough chassis (2, 39) is arranged off-centre relative to the journals (10, 11) of the receiving part (8).

9. A device according to one of claims 1 to 8, characterised in that the receiving part (8) is trapezoidal in shape.

**Revendications**

1. Dispositif de fixation réglable d'outils préparateurs — par exemple rasettes à fumier ou autres rasettes, coutres circulaires — sur des charrues, comportant une jambe (6) qui réunit les outils préparateurs (5) avec la charrue, cette jambe étant rattachée à la charrue (1) par un dispositif de serrage (7) et les outils préparateurs étant chacun fixés par un autre dispositif de serrage, l'un au moins de ces dispositifs de serrage, qui peut être rattaché au châssis de la charrue (2, 39) et/ou à l'outil (5), comportant un organe de prise (8) pour fixer la jambe (6) dans la direction axiale et en outre une plaque de pression (13, 32) et des moyens de serrage (16 à 19 ; 33, 34) qui maintiennent la jambe (6) dans l'organe de prise (8), auquel un contre-appui (23 ; 37, 38) peut être relié sans rotation possible, ce contre-appui (23 ; 37, 38) présentant des surfaces saillantes (37, 38), caractérisé en ce que pour réaliser la fixation sans rotation possible de la jambe (6), celle-ci est pourvue d'une ou plusieurs couronnes dentées (21), s'étendant sur au moins une partie de la périphérie de la jambe (6), et entre les dents desquelles le contre-appui (23 ; 37, 38) s'insère à l'état fixé ; en ce que ce dernier est formé, soit par un évidement (23), adapté à la couronne dentée (21), dans une plaque (13, 25), soit par des surfaces saillantes (37, 38) qui sont disposées sans rotation possible par rapport à l'organe de prise (8) ; et en ce que l'évidement (23) et/ou les surfaces (37, 38) sont maintenus appuyés sur la couronne dentée (21) par les moyens de serrage (16 à 19).

2. Dispositif selon la revendication 1, caractérisé en ce que l'évidement (23) est ménagé dans la plaque de pression (13).

3. Dispositif selon la revendication 1 ou 2, caractérisé en ce que l'évidement (23) est ménagé dans une plaque (25) située en regard de la plaque de pression (13).

4. Dispositif selon l'une des revendications 1 à 3, caractérisé en ce que le contre-appui est formé par l'évidement (23) dans la plaque de pression (13).

5. Dispositif selon l'une des revendications 1 à 4, caractérisé en ce que la couronne dentée (21) est disposée avec coulissement possible le long de l'axe de la jambe.

6. Dispositif selon l'une des revendications 1 à 5, caractérisé en ce que la plaque de pression (13) présente, dans la région de la couronne dentée (21), une conformation bombée (24) adaptée à son contour.

7. Dispositif selon l'une des revendications 1 à 6, caractérisé en ce que dans la plaque de pression (32) des moyens de serrage (33, 34), qui agissent directement sur la jambe (6), sont disposés.

8. Dispositif selon l'une des revendications 1 à 7, caractérisé en ce que l'organe de prise (8) pour la fixation de la jambe (6) sur le châssis de charrue (2, 39) est disposé de façon excentrée par rapport aux tenons (10, 11) de l'organe de prise (8).

9. Dispositif selon l'une des revendications 1 à 8, caractérisé en ce que l'organe de prise (8) est constitué avec une forme trapézoïdale.

Fig. 1b

Fig. 1a

Fig. 2

Fig. 6

Fig. 10

Fig. 3

Fig. 5
A - A

Fig.7

Fig.11

Fig.8

Fig.4

Fig.9

B-B

Fig.12

C-C